Europäisches Patentamt

European Patent Office

Office européen des brevets

(11) Publication number: **0 195 590 B1**

# EUROPEAN PATENT SPECIFICATION

(45) Date of publication of patent specification: **03.11.93**  (51) Int. Cl.⁵: **G11B 5/245**, G11B 5/49

(21) Application number: **86301784.4**

(22) Date of filing: **12.03.86**

(54) **Electromagnetically controlled scanning magnetic transducer.**

(30) Priority: **22.03.85 US 715211**

(43) Date of publication of application:
**24.09.86 Bulletin 86/39**

(45) Publication of the grant of the patent:
**03.11.93 Bulletin 93/44**

(84) Designated Contracting States:
**DE FR GB IT NL**

(56) References cited:
EP-A- 0 171 957          DE-A- 3 418 853
DE-B- 1 159 017          GB-A- 1 155 357
SU-A- 1 065 876          US-A- 3 188 399
US-A- 3 391 254          US-A- 3 549 824
US-A- 3 555 204          US-A- 3 573 844

(73) Proprietor: **AMPEX CORPORATION**
**401 Broadway**
**M.S. 3-35**
**Redwood City California 94063-3199(US)**

(72) Inventor: **Gooch, Beverley R.**
**703 Chopin**
**Sunnyvale California(US)**

(74) Representative: **Horton, Andrew Robert Grant**
**et al**
**BOWLES HORTON**
**Felden House**
**Dower Mews**
**High Street**
**Berkhamsted Hertfordshire HP4 2BL (GB)**

## Description

This invention relates in general to an electromagnetically controlled scanning magnetic transducer wherein the location of a recording/reproducing zone within the transducer is controlled by electromagnetic rather than mechanical means. More particularly, this invention relates to an improved scanning transducer in which interference between the transducing signal flux and a control flux is virtually eliminated.

## BACKGROUND OF THE INVENTION

In wideband magnetic signal recording, it is important to provide a high relative transducer-to-recording medium speed necessary for recording high frequency signals with high quality resolution. Increasing the speed of the recording medium past a stationary transducer is limited by the resulting increase in the consumption of the medium as well as by mechanical limitations associated with the high speed of transport.

Rotary head transducers utilised in magnetic tape recorders represent a significant development in increasing the relative head-to-tape speed. Here the transducer rotates at high speed in contact with a relatively slowly advancing magnetic tape. Depending on the angle at which the transducer sweeps the tape there are two basic types of rotary scan recorders, which are generally referred to as transverse and helical scan recorders. There are many problems associated with obtaining desired accuracy in and reproducibility of the signal recorded by rotary head recorders. For example, it is necessary to maintain very small mechanical tolerances of the rotating drum, the transducer structure and the location of the transducer within the drum. At the same time it is necessary to maintain accurately the rotational speed of the drum with respect to the longitudinal tape speed.

In magnetic recorders utilising electromagnetically controlled scanning transducers many of the disadvantages associated with mechanically rotating the transducers may be eliminated or reduced. For example, high scanning speed may be obtained by electromagnetically scanning the signal to be transduced across the width of the transducer and thereby across the recording medium.

One known scanning magnetic transducer has stacked magnetic laminations separated from each other by nonmagnetic spacers. Each lamination represents a closed magnetic circuit comprising a transducing gap. The stacked laminations have leg portions of controlled width increasing in gradual steps in opposite directions on opposite sides of the transducer, which leg portions are linked by control windings. The scanning operation is obtained by saturating selected leg portions on opposite sides of the transducer so that only one lamination at a time remains in a transducing mode. The location of the operating lamination is controlled by control currents applied to the control windings.

In this type of known transducer, scanning is obtained by sequentially interrupting the magnetic circuit of each lamination thereby interrupting the transducing flux path. Because it is necessary to use leg portions of varying width, the controlled width portions, and resulting interruption zone, must be at distant locations from the transducing gap and transducer face. Consequently the nonsaturated portions facing a recording medium are susceptible to picking up crosstalk from adjacent active laminations or stray flux from adjacent recorded signal tracks on the medium. These picked-up signals may then be recorded on the medium or, at playback, they may leak into the magnetic circuit of an adjacent active element and cause degradation of the playback signal provided thereby. It will be appreciated that the above indicated disadvantages become more significant with increased frequency and density of recording.

It is a further significant advantage of these known transducers that, in order to reduce cross talk between the laminations, each magnetic lamination of the stack must be physically and magnetically separated from adjacent laminations. Therefore, only an incremental scanning motion across the medium is possible and this is obtained by sequentially switching on and off the magnetic circuits of adjacent laminations, that is, in a discrete step-like manner, rather than continuously. Also, track width must be not less than the width of a single lamination and is adjustable only to integral multiples of this width.

The foregoing is a disadvantage particularly in high frequency wideband recording/reproduction on narrow tracks where continuous scanning as well as accurately locating the transducer element over a narrow track are essential requirements for high quality performance.

In known transducers both the transducing signal flux path and the control flux extend in substantially parallel paths within the transducer core. Thus an interference between these fluxes may occur. As it is known, such interference may decrease the quality of signal recording and reproduction. In addition, any control flux fringing from the transducing gap in the direction of the signal flux may tend to demagnetise the recorded medium. While it is possible to arrange the geometry of the cores and the transducing and control windings thereon to minimize interference between the control and signal fluxes, a possibility of such interference cannot be eliminated entirely. Particularly in small compact electromagnetically controlled scanning transducers it becomes increasingly difficult to keep the transducing and control fluxes from influencing each other.

One object of the present invention is to substantially eliminate interference between the control and transducing signal fluxes of an electromagnetically controlled scanning magnetic transducer.

Alternatively or additionally, the present invention also provides for electromagnetic scanning by means of selective saturation of the transducer core portions facing the medium and adjacent to a transducing gap.

Moreover, the present invention simplifies the structure of an electromagnetically controlled scanning transducer having the above-indicated features, to economise manufacture.

A transducer which has the features set forth in the precharacterising portions of the independent claims is disclosed in US-A-3555204.

In one aspect the invention provides a magnetic transducer comprising: a magnetic core having confronting poles defining a face portion at which a transducing zone is formed for magnetically coupling information signal flux relative to a record medium located adjacent the face portion; and an information signal winding magnetically coupled to said core for coupling information signal flux with respect to said core; characterised by means for providing control flux that flows in said face portion to define adjacent satured and unsatured regions in said face portion of said core to form said transducing zone in said face portion, said means causing said control flux to flow preferentially in said face portion in a direction generally transverse to the path of information signal flux in said face portion.

In another aspect the invention provides a magnetic transducer, comprising: two corresponding magnetic cores with poles defining a transducing gap therebetween at a face defined by said cores, said cores having monotonically changing magnetic reluctances in opposite directions on either side of said transducing gap and along a width thereof; a control winding associated with each said core, respectively, for providing a control flux that selectively saturates a portion of each said core to restrict the flow of information signal flux in said cores; and an information signal winding associated with said magnetic cores for coupling information signal flux with respect to said magnetic cores and said transducing gap; characterised in that the said portions are disposed at said face adjacent said gap and said information signal flux and said control flux extend within said cores in paths that are generally transverse to each other.

In a further aspect the invention provides a magnetic transducer comprising: a magnetic core including a nonmagnetic gap at a face defined by said core and extending in a width direction for effecting coupling of information signal flux relative to a record medium located adjacent said face; and an information signal winding magnetically coupled to said core for transferring information that is defined in said core as information signal flux which flows along a path at the face of said core, which path lies in a plane transverse to said width direction of said gap; and means for providing control flux which flows in said core to define a transducing zone that determines the location at which information signal flux is coupled relative to a record medium; characterised in that said control flux providing means is disposed to cause said control flux to flow along a path at the face of the core and in a plane which is generally transverse to the plane containing the path of information signal flux such that the path of information signal flux is transverse to the path of control flux.

A preferred electromagnetically controlled scanning transducer in accordance with the present invention has transducing signal and control windings for respectively providing transducing signal and control fluxes extending within the transducer core. These respective windings are arranged to obtain signal and control flux paths which extend within the transducer core in substantially perpendicular paths relative to each other. In this manner control flux components are thus substantially eliminated from the signal flux path and analogously, signal flux components are substantially eliminated from the control flux path. Thereby any interference between the control and signal fluxes may be virtually eliminated.

In the preferred embodiment the control windings are arranged to selectively saturate core portions adjacent to the transducing gap and facing the recording medium. These core portions will be further referred to as face portions. Each saturated face portion defines an adjacent nonsaturated face portion while a desired steep permeability versus flux density gradient is obtained across the transducer width. The nonsaturated face portions located on opposite sides of the transducing gap overlap across the transducing gap to define a highly permeable transducing zone of a desired width. By saturating the core portions facing the recording medium and adjacent to the transducing gap, crosstalk and stray flux pickup by non-operating portions of the transducer core are substantially eliminated.

The preferred embodiment of the electromagnetically controlled scanning transducer described in this application have two confronting magnetic front cores defining a transducing gap therebetween and two confronting magnetic back cores corresponding to and in close proximity to the front cores. A transducing signal winding is arranged in the front cores immediately at the transducing gap. Respective control windings are arranged in each back core for providing a control flux therein which is magnetically coupled into the front core. The transducing signal winding and the control windings are arranged perpendicularly to each other. More specifically, the respective turns of the transducing and control windings extend in substantially perpendicular planes to each other. By selectively applying a control current to each control winding a control flux is induced in each back core, and coupled from each back core into the corresponding front core. The thusly induced control fluxes selectively saturate the front cores on both sides of the transducing gap. The saturated portions of each front core define an adjacent nonsaturated highly permeable portion. These permeable portions overlap across the transducing gap to define a transducing zone.

In accordance with a preferred embodiment of the present invention a desired steep flux density versus permeability gradient across the transducer width is obtained by providing the corresponding front cores in the form of two oppositely oriented confronting wedge sections. The wedge sections have cross-sectional areas gradually increasing in opposite directions on either side of the transducing gap along the width thereof. Respective control currents are applied to the control windings arranged at the back cores. A resulting magnetic flux from each back core is coupled to the adjacent front core. The magnitudes of the control currents are selected to saturate a portion of each front core while leaving an adjacent nonsaturated highly permeable portion of each front core. These nonsaturated highly permeable portions overlap to define a transducing zone of a desired width extending across the transducing gap. By changing the magnitudes of the respective control currents in opposite senses, the position of the transducing zone can be changed along the width of the transducer. For example, when the magnitudes of the respective control currents are continuously varied in opposite sense, the location of the highly permeable transducing zone is being continuously scanned along the width of the transducer. Alternatively, the transducing zone can be narrowed, widened or otherwise modified in a continuous manner.

BRIEF DESCRIPTION OF THE DRAWINGS

Figure 1A is a simplified perspective view of a preferred embodiment of an electromagnetically-controlled scanning magnetic transducer in accordance with the invention.

Figures 1B to 1D respectively show various forms of recording which can be obtained when utilising the transducer of the present invention.

Figure 2 is a schematic diagram of a control circuit utilised to drive the transducer of Figure 1A.

Figure 3 is a control voltage versus control current characteristic obtained by the circuit of Figure 2.

Figure 4 is an example of a flux density versus permeability characteristic of a well known magnetic material.

Figure 5 shows a front elevation view of two confronting front cores of the transducer of Figure 1A rotated by 90 degrees.

Figure 6 shows two superposed flux density versus permeability characteristics of Figure 4, each corresponding to one front core shown in Figure 5.

Figure 7 is a simplified perspective view of another version of the transducer structure shown in Figure 1A.

Figure 8 shows a further version of the transducer structure of Figure 1A.

Figure 9 is a still different version of the transducer structure of Figure 1A.

DETAILED DESCRIPTION

In the following description, like elements will be designated by like reference numerals to facilitate comparison between various embodiments. The description of similar elements and circuit portions may not be repeated with reference to subsequent drawing figures related to various embodiments of the invention.

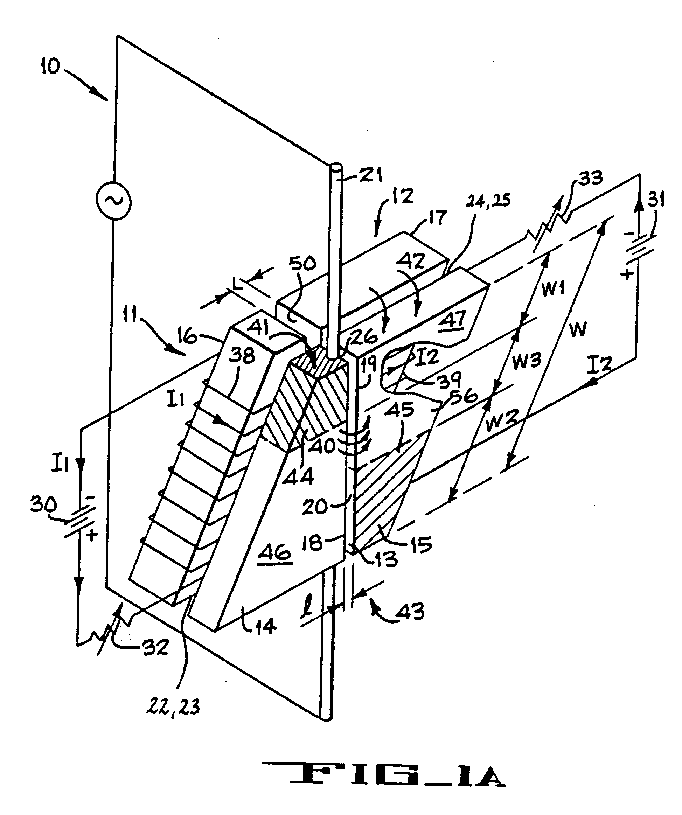

Figure 1A shows a preferred embodiment of an electromagnetically-controlled scanning transducer of the invention. The transducer 10 has two confronting cores 11, 12 made of a magnetic material. Each core 11, 12 has a front core 14, 15 and back core 16, 17 arranged in close proximity to each other, respective lateral surfaces 22, 23 and 24, 25 of the front and back cores being in confronting relationship.

In this embodiment the front cores 14, 15 are made in the form of oppositely oriented wedge sections, confronting at a transducing gap plane 13. The oppositely oriented wedge sections of each confronting core 11, 12 have cross-sectional areas gradually increasing in opposite directions across the width W of the transducer 10.

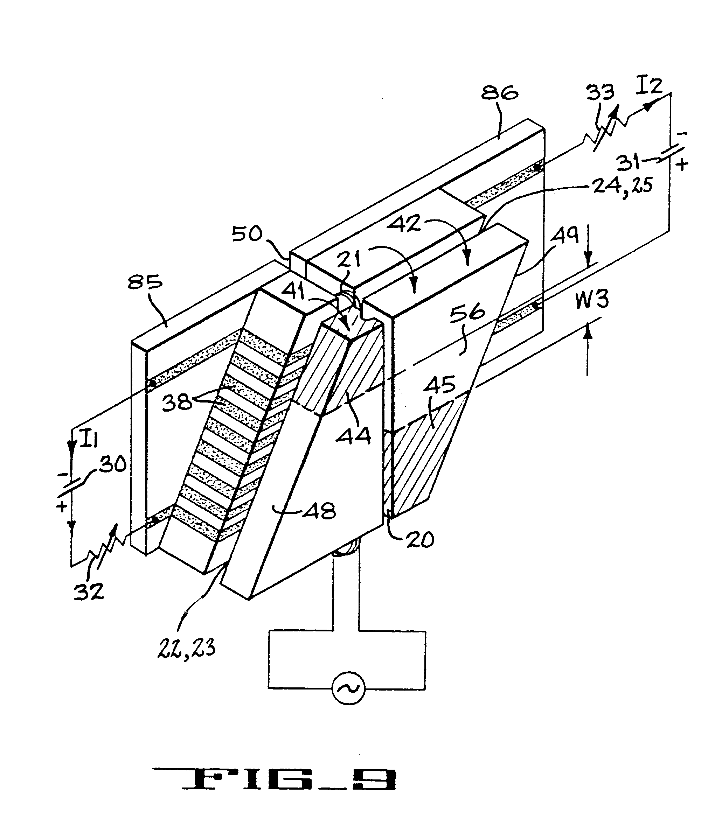

The confronting front cores 14, 15 are smoothly lapped and polished at the transducing gap plane 13 to obtain confronting magnetic pole faces 18, 19. A winding window 26 is provided in a well known manner in one or both front cores 14, 15 across the width W of transducer 10 to accommodate a transducing signal winding 21. As an example in Figure 1A the winding 21 is shown as a single turn winding in the form of a conductive rod. However, a conventional multiturn winding may be utilised instead such as shown at 21 in Figure 9.

A suitable nonmagnetic material is provided between the pole faces 18, 19 to obtain a transducing gap 20, utilising conventional transducing gap forming techniques. For example, a layer of silicon dioxide or glass may be deposited on the confronting surfaces 18, 19 which surfaces then may be bonded together in a well known manner.

In the preferred embodiment the back cores 16, 17 are also formed as oppositely oriented wedge sections similar to the front cores 14, 15. Alternatively, the back cores may be of a rectangular or any other convenient shape suitable to provide a control flux for selectively saturating the front cores 14, 15.

Respective control windings 38, 39 are wound around each back core 16, 17 to right angles to the direction in which the transducing signal winding 21 extends through the front cores. By the foregoing arrangement of the signal and control windings a respective signal flux 40 and control fluxes 41, 42 are induced in the transducer cores, which fluxes extend in substantially perpendicular paths with respect to each other. The foregoing is an important feature of the present invention resulting in virtual elimination of control flux components in the signal flux path, as well as of signal flux components in the control flux path, as previously mentioned. Any interference between the control and signal fluxes is thereby substantially eliminated.

To obtain an efficient coupling of the control fluxes generated by the control windings 38, 39, from the back cores 16, 17 into the front cores 14, 15, it is important to arrange the respective confronting lateral surfaces 22, 23 and 24, 25 as close as possible. Ideally, these surfaces should abut to lower the reluctance of the control flux paths between the back and front cores.

It is preferred that the back cores 16, 17 have somewhat larger cross sectional areas, in the direction perpendicular to that of the control flux path extending therein, than the front cores 14, 15, as shown in the example of Figure 1A, so that the back cores will not be saturated by the control fluxes.

Alternatively, or additionally, the material of the back cores may be selected to have a greater saturation density than the material of the front cores, to avoid saturation of the back cores.

In operation, respective control currents $I_1$, $I_2$ are applied to the control windings 38, 39. Magnetic flux is thereby induced in each back core 16, 17 in a direction perpendicular to the direction of the control current flow, (i.e. along the axis of the coils of the respective winding 38, 39. The control flux from the back cores 16, 17 is coupled into the closely spaced front cores 14, 15 respectively, as shown by the arrows 41 and 42.

The control currents $I_1$, $I_2$ are applied for example from respective DC control voltage sources 30, 31 via variable resistors 32, 33 to flow through the respective control windings 38, 39 as shown in Figure 1A. The magnitudes of the control currents are selected such that selected portions 44, 45 of each front core 14, 15 are saturated thereby. The saturated portions define adjacent nonsaturated highly permeable portions which overlap to define a transducing zone 56.

It will be understood that saturation requires a particular flux density and that owing to the varying cross-sectional areas of the front cores they may be, in this example, progressively saturated in accordance with increasing control current.

It is preferable to orient the control currents $I_1$ and $I_2$ such that both control fluxes 41 and 42 extend in the same sense, as shown in Figure 1A, so as to avoid interference between these control fluxes across the transducing gap 20.

In the example shown in Figure 1A the width of the saturated portion 44 of the core 14 is W1 and the width of the saturated portion 45 of the front core 15 is W2.

The respective saturated front core portions 44, 45 extend at a transducer face 43 facing the recording medium on opposite sides of the transducing gap 20 and immediately adjacent thereto. The saturated core portions 44, 45 delimit respective adjacent nonsaturated portions or regions 46, 47 which overlap across the transducing gap 20. The overlapping portions 46, 47 define in common permeable transducing region 56 of a width W3, extending across the gap 20.

By increasing the magnitude of one control current, for example $I_1$, while decreasing the magnitude of the other control current $I_2$, the respective widths W1, W2, change conversely and the transducing zone 56 can be selectively moved along the width W of the transducing gap 20. For example, when it is desired to periodically scan the transducing zone 56 at a high speed along the transducer width W, a control circuit may periodically change conversely and linearly the magnitudes of both currents $I_1$, $I_2$ thereby changing the widths W1, W2 of the saturated portions 44, 45. To maintain a constant width W3 of the transducing zone 56 during scanning, it is necessary in this embodiment to maintain a constant sum of the changing control currents, that is $I_1 + I_2 =$ const.

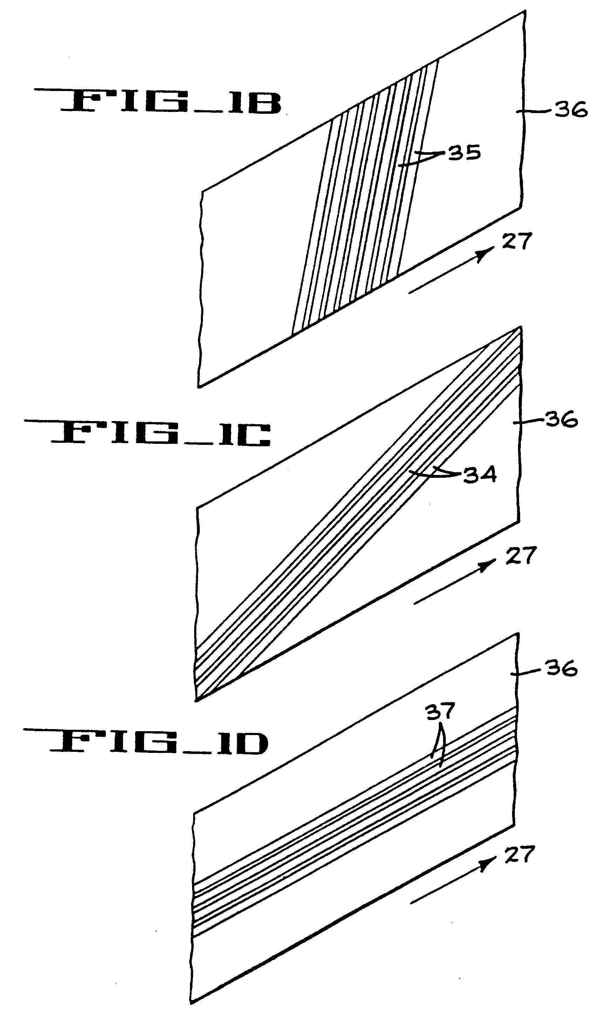

To obtain selected saturated portions of each front core 14, 15, as previously indicated, a control circuit, for example shown in Figure 2 is utilised to supply respective control currents $I_1$, $I_2$ to control windings 38, 39 as will be described below.

In the preferred embodiment the control currents $I_1$, $I_2$ are varied differentially to periodically scan a transducing zone of a constant width across the width W of the transducer. Thereby an information signal may be recorded or reproduced along transverse track 35 of a longitudinally moving magnetic tape 36 in a direction 27, as shown in Figure 1B. It will be understood, however, that alternatively other recording/reproducing formats can be obtained.

For example, when current values $I_1$, $I_2$ are maintained constant, for example by utilising DC sources 30, 31 shown in Figure 1A, and setting the variable resistors 32, 33 at a constant value, the transducing zone will assume a fixed position. This latter application may be useful to obtain recording along longitudinal tracks such as shown at 37 in Figure 1D. During recording or reproduction on longitudinal or helical tracks, the position of the transducing zone may be stepped from track to track. Alternatively, recorded helical tracks 34, as shown in Figure 1C, may be reproduced by the transducer of the invention fixedly mounted in a rotating drum, while the position of the transducing zone within the transducer may be moved across the recorded track width to provide optimum playback performance.

Figure 2 is an example of a schematic control circuit diagram 54 which may replace DC sources 30, 31 and resistors 32, 33 of Figure 1A, to drive the control windings 38, 39 of transducer 10 of Figure 1A to control the position of a transducing track zone 56 at the transducer face 43 along the width W of the transducer. In the presently described preferred embodiment the transducing zone 56 is periodically scanned along transverse tracks 35 of magnetic tape 36, as shown in Figure 1B. It will be understood however that the control circuit 54 may be adapted to obtain different operating modes of the transducer 10 when utilised in other recording or reproducing applications as previously mentioned.

The circuit 54 of Figure 2 utilises an AC control voltage source 61 generating a periodically changing control voltage Vc. Voltage Vc is converted by the circuit of Figure 2 into differentially changing control currents $I_1$, $I_2$ as follows.

The voltage Vc is applied via a resistor 62 to an inverting input of a first operational amplifier 63, which has a feedback resistor 64 and represents a voltage follower. The output of amplifier 63 is connected via a further resistor 65 to an inverting input of a second operational amplifier 66 which has a feedback resistor 67. Amplifier 66 inverts the output signal of amplifier 63. The output of the first amplifier 63 is also connected via a resistor 68 to an inverting input of a third operational amplifier 69 having a feedback resistor 70. The output of the second amplifier 66 is connected via a resistor 71 to an inverting input of a fourth amplifier 72 having a feedback resistor 73. An adjustable potentiometer 74 is connected between a source of negative DC voltage and ground to obtain a control current offset Io. The output of potentiometer 74 is connected via a resistor 75 to the inverting input of third amplifier 69 and via a resistor 76 to the inverting input of the fourth amplifier 72, respectively.

The output of the third amplifier 69 is connected to the previously described first control winding 38 of transducer 10, which in turn is connected via feedback resistor 70 to the inverting input of amplifier 69. Similarly, the output of the fourth amplifier 72 is connected to the previously described second control winding 39, whose second terminal is connected via feedback resistor 73, to the inverting input of amplifier 72. The connection between coil 38 and resistor 70 is grounded via a resistor 77. Similarly, the connection between coil 39 and resistor 73 is grounded via a resistor 78. The respective non-inverting inputs of all four operational amplifiers 63, 66, 69 and 72 are grounded. The amplifiers 69, 72 and respective resistors 70, 77 and 73, 78 represent a first and second current source, respectively.

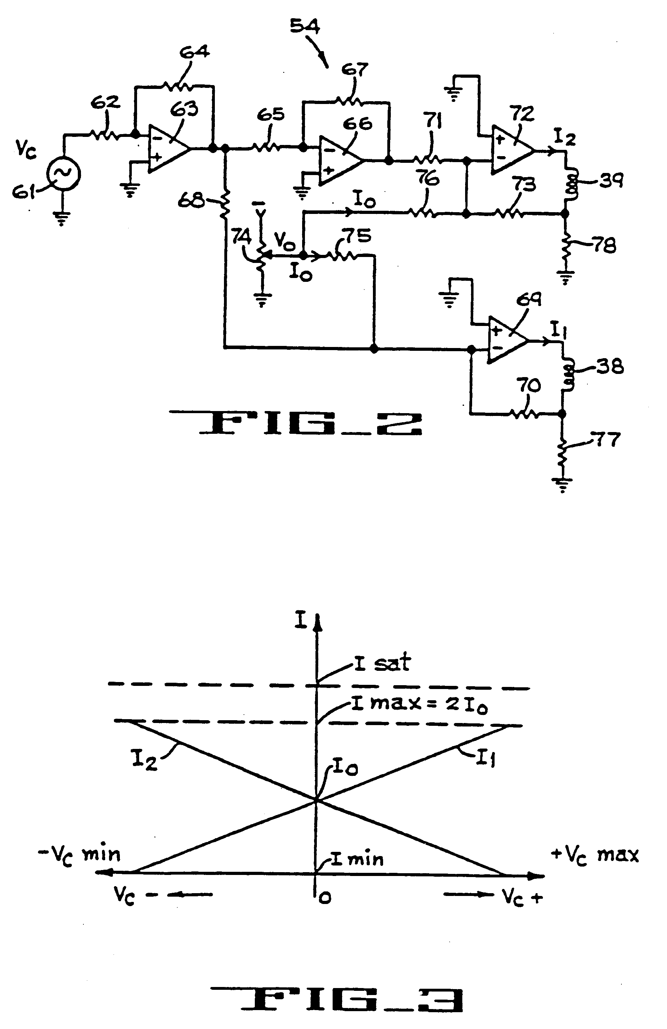

In operation, the voltage Vc from source 61 is applied via the voltage follower 63, 64 to the first current source 69, 70, 77 which applies to the first control winding 38 a control current $I_1$, directly proportional to input voltage Vc. The voltage obtained at the output of amplifier 63 and inverted by the inverter 66, 67 is applied to the second current source 72, 73, 78 which applies to the second control winding 39 a control current $I_2$ inversely proportional to the input voltage Vc. The potentiometer 74 connected to a negative DC voltage sets a desired control current offset Io, which in the presently described embodiment is half-way between the minimum and maximum control current values, that is $Io = (Imax - Imin)/2$, as is described below in more detail with reference to Figure 3.

It follows from the foregoing description that when voltage Vc has a periodically changing amplitude betwen Vcmin and Vcmax as shown in the diagram of Figure 3, circuit 54 converts the thusly changing control voltage into substantially linearly changing control currents $I_1$, $I_2$ obtained at the respective outputs of the first and second current source, respectively. The control currents $I_1$, $I_2$ thus change differentially, that is in mutually opposite senses while changing substantially in linear proportion to the input voltage Vc as depicted in Figure 3 and defined in the following equations:

(I)     $I_1 = KVc + Io$

       $I_2 = -KVc + Io$

where K and Io are constants dependent on the parameters of the circuit of Figure 2 and can be derived therefrom.

To obtain a high quality performance by the scanning transducer of the invention, a well defined boundary between adjacent saturated and nonsaturated areas of the front cores 14, 15 is desirable. The foregoing is obtained by selecting the shape of the confronting front cores such that a maximum rate of change in permeability between adjacent cross-sectional areas of each core is obtained across the transducer width W. The foregoing assures that while a selected area of each front core is saturated by a control current, so that no appreciable flux passes therethrough, an immediately adjacent contiguous area remains sufficiently permeable for transducing information signals. Consequently, the performance of the transducer 10 depends on the steepness of a permeability versus flux density gradient between each adjacent saturated and nonsaturated region within each front core.

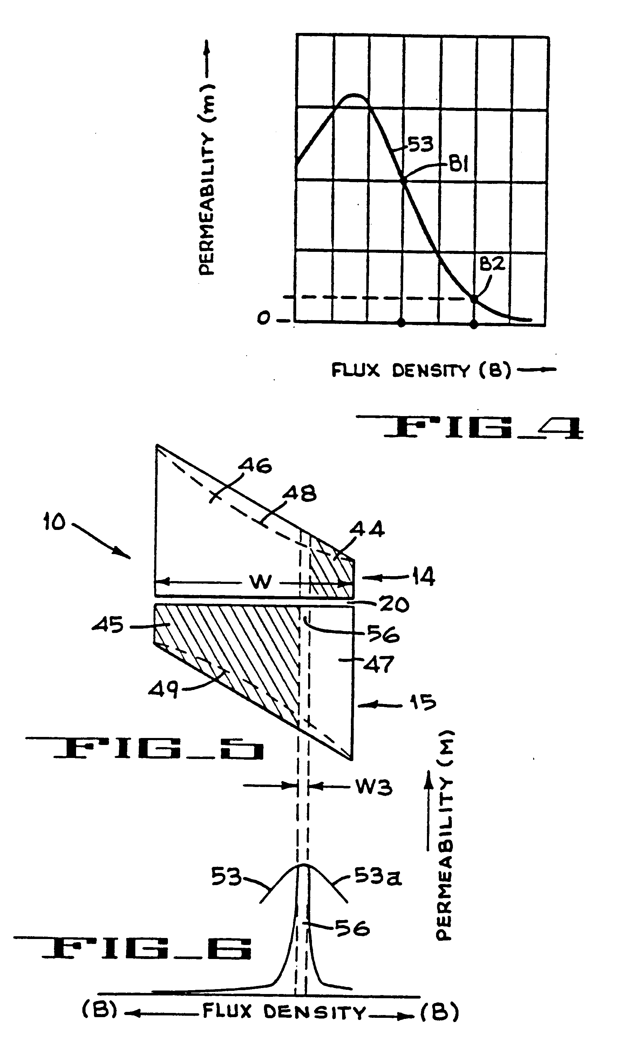

As an example, Figure 4 shows a well known permeability m versus flux density B characteristic of a suitable magnetic core material, for example ferrite PS52B made by Ampex Corporation. The origin is at zero permeability and 1000 Gauss (0.1 Tesla), the vertical divisions being in steps of 100 Gauss/Oersted ($1.25 \times 10^{-4}$ Henry/metre) and the horizontal divisions being in steps of 1000 Gauss (0.1 Tesla). As it is seen from that characteristic, a relatively high permeability m, greater than 400 Gauss/Oersted ($5 \times 10^{-4}$ Henry/metre) is obtained at a flux density B below $B1 = 4000$ Gauss (0.4 Tesla), which high permeability is sufficient for a desired transducing operation. The saturation flux density of that material is approximately $B2 = 6000$ Gauss (0.6 Tesla) corresponding to a permeability below 100 Gauss/Oersted ($1.25 \times 10^{-4}$ Henry/m), as shown in Figure 4. Consequently, for obtaining a desired rapid transition between a highly permeable region and an adjacent saturated region within the transducer front core, the permeability must change rapidly from below 100 Gauss/Oersted ($1.25 \times 10^{-4}$ Henry/m) to over 400 Gauss/Oersted ($5 \times 10^{-4}$ Henry/m) in either direction, as shown in Figure 4.

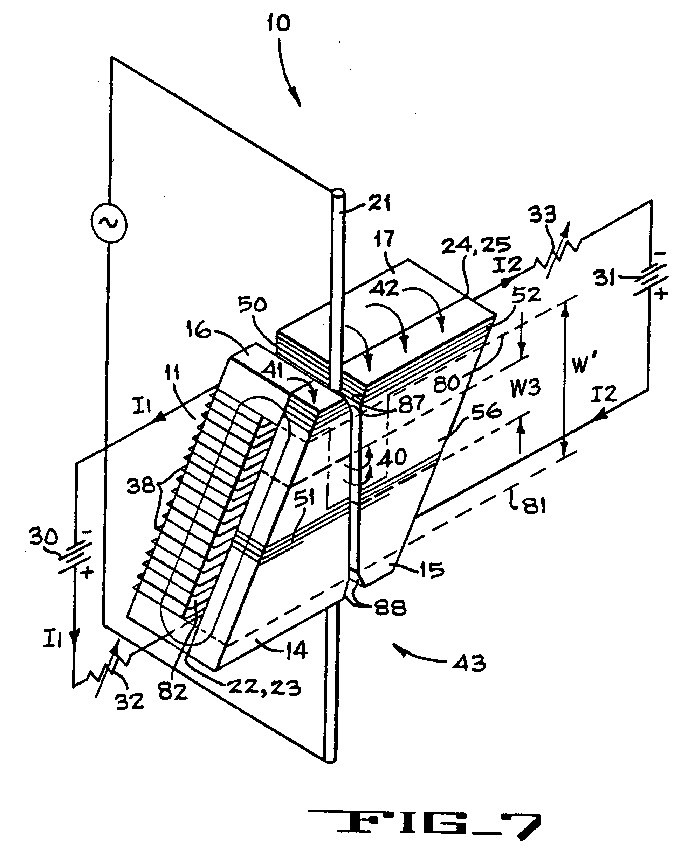

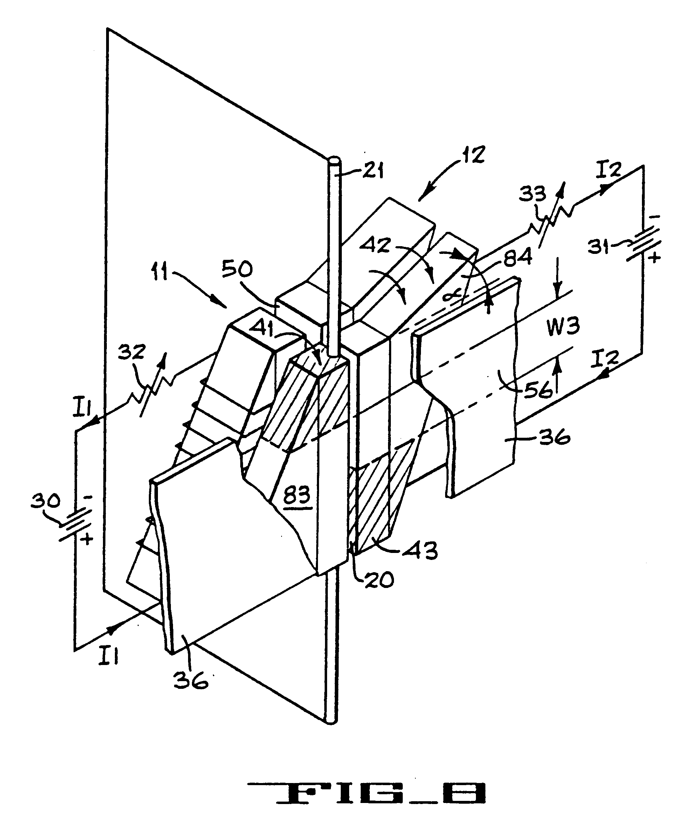

Figure 6 shows an example of two superposed flux density versus permeability characteristics 53, 53a, each corresponding to the characteristic of Figure 4, and each pertaining to one oppositely oriented wedge shaped front core 14, 15. Figure 5 is a schematic front view representation of confronting front cores 14, 15 of Figure 1A rotated by 90 degrees. The cross-hatched areas 44, 45 represent the saturated regions that is, core portions having a permeability less than 100 Gauss/Oersted.

The other core portions in Figure 5 represent nonsaturated high permeable areas 46, 47 having a permeability over 400 Gauss/Oersted. The transducing zone 56 which extends across the transducing gap 20 and which is formed by the overlapping nonsaturated highly permeable regions 46, 47 corresponds to overlapping portions of superposed characteristics 53, 53a which portions indicate permeability between 100 and 400 Gauss/Oersted. From Figures 5 to 6 it is seen that a well defined transducing zone 56 requires a characteristic having a permeability versus flux density gradient as sharp as possible. The latter requirement can be obtained by selecting a transducer core material with a steep characteristic curve and by designing the wedge section such that large flux density changes take place between adjacent cross-sectional areas over the entire transducer width W corresponding to scanning length. To further increase the permeability gradient it is preferred to use for the transducer core a magnetically anisotropic material, oriented with an easy axis of magnetisation perpendicular to the plane of the transducing gap.

To further increase the flux density gradient between two adjacent cross-sectional areas for obtaining a steep permeability versus flux density gradient, it is possible to approximate the shape of the wedge sections to that of the characteristic of Figure 4, that is, to obtain cross-sectional areas of the wedge shaped front cores 14, 15 exponentially increasing in the direction of the transducer width W. The foregoing can be obtained by providing exponentially increasing side surfaces 48, 49 of front cores 14, 15 as it is shown in phantom in Figure 5.

To further enhance a desired sharp definition of the unsaturated, highly permeable zone, the front cores 14, 15 may be made of thin magnetic laminations insulated from each other by a thin nonmagnetic layer. These lamination layers, for example shown at 51 and 52 in Figure 7 are preferably provided in a direction perpendicular to the transducing gap plane and stacked along the transducer width W utilising well known magnetic core lamination techniques.

It is understood from the foregoing description of the operation of the transducer of Figure 1A that the control flux 41 or 42 generated in one back core 16 or 17 should not be coupled into the other back core. Therefore, it is preferable to provide between these back cores 16, 17 a gap 50 of a substantially greater length L with respect to a length l of the transducing gap 20 provided between the front cores 14, 15. Preferably, the ratio l:L is selected to be 1:10 or more.

To keep transducing signal flux losses at a minimum it is preferable to provide the transducing winding window 26 closer to the transducer face 43 than to the lateral surfaces 22, 24 opposite to face 43. A preferable ratio of these respective distances of the winding window from surfaces 43 and 22, 24 is approximately 1:10.

A variation of the above-described preferred embodiment of Figure 1A is shown in Figure 7. Because of the apparent similarities of these embodiments only the differences will be described to avoid repetition.

In the embodiment of Figure 7 respective grooves 82 are provided in the back cores 16, 17, inwardly of the lateral surfaces 23, 25. Grooves 82 serve to accommodate the control windings 38, 39 of each back core 16, 17, respectively. The control winding 38 and the groove 82 are illustrated only for one back core 16 for convenience. By placing the control windings 38, 39 in recesses provided by grooves 82 the confronting lateral surfaces 22, 23 and 24, 25 can be placed in intimate contact with each-other. Air gaps between the front and back cores are thereby substantially eliminated while a desired tight magnetic coupling between these cores is obtained.

However, in the embodiment of Figure 7 the uppermost and lowermost portions of the face 43 across the transducer width will not become saturated with respect to the intimate contact between the front and back cores at these portions. Consequently, only an area between the interrupted lines 80, 81 will become saturated. To eliminate crosstalk between the nonsaturated areas of the corresponding front cores 14, 15, bevelled edges 87, 88 are preferably provided at both ends of the gap 20 across the transducer width W. A reduced effective transducer width W' thus extends between the lines 80, 81.

Another variation of the embodiment of Figure 1A is shown in Figure 8. It differs from that of Figure 1A in that portions 83, 84 of the front cores 14, 15 are provided which diverge away at a selected angle from the front surface 43 of the transducer. Preferably the angle is about 15 degrees. The foregoing feature reduces the transducer-to-medium interface area thereby reducing wear in contact recording. It also reduces the well known head contour effect, thereby reducing any interference between the transducing gap flux and the flux originating from outer edges of the transducer.

A still further variation of the above described embodiment is depicted in Figure 9. Here the control windings 38, 39 are deposited on the back core in the form of a thin film layer. For example a layer of copper is deposited utilising a suitable mask and well known material deposition techniques. In this embodiment the gap between the respective confronting lateral surfaces 21, 22 and 23, 24 of the front and back cores is minimised. The embodiment of Figure 9 has an advantage over the embodiment of Figure 7 in that a minimum reluctance between the front and back cores is obtained without the need of providing grooves in the back cores to accommodate the control windings. The thin film coils 38, 39 in Figure 9 are terminated on respective insulating terminal boards 85, 86 to facilitate connection with the respective voltage sources 30, 31.

It is noted that the representation of the respective gaps between the confronting surfaces 21, 22 and 23, 24 as well as gaps 20 and 50 is greatly exaggerated in size in all figures to obtain a better representation of the cores and respective windings.

Although the transducer-to-medium interface area 43 has been shown in the various embodiments as being generally flat it may be contoured, if desired, utilising well known contouring techniques.

It is preferable to hold the resulting transducer structure in a nonmagnetic holder (not shown) and to bond the respective transducer elements together for example by epoxy, utilising well known bonding techniques. However, such bonding material is omitted from the drawings to obtain better clarity of representation.

It is seen that in all the above described transducer embodiments the respective control fluxes 41, 42 extend substantially in perpendicular paths to the direction of the transducing signal flux 40, resulting in substantial elimination of any interference between these fluxes. In addition, it is seen from the foregoing disclosure that these preferred embodiments are relatively simple to manufacture, while desired core shapes may be obtained to maximise the permeability versus flux density gradient across the transducer width.

## Claims

1.  A magnetic transducer comprising: a magnetic core having confronting core parts (14,15) defining a face portion at which a transducing zone is formed for magnetically coupling information signal flux relative to a record medium located adjacent the face portion; an information signal winding (21) magnetically coupled to said core for coupling information signal flux (40) with respect to said core; and control means (38,39) for providing control flux (41,42) that flows in said core to define adjacent saturated and unsaturated regions (44,45; 45,47) in said core to effect selectively magnetic coupling of information flux relative to the record medium; characterised in that the control means provides the control flux that defines the adjacent saturated and unsaturated regions in said face portion to define said transducing zone therein and causes said control flux to flow preferentially in said face portion in a direction generally transverse to the path of information signal flux in said face portion.

2. A magnetic transducer according to claim 1 wherein said control means and the core parts are configured to cause said control flux to flow within said face portion in a direction which is substantially perpendicular to said path of said information signal flux.

3. A magnetic transducer according to claim 1 or 2 wherein said control means comprises a control winding (38) having turns which extend in a plane that is generally transverse to the plane in which the or each turn of said information signal winding extends.

4. A magnetic transducer according to claim 3 wherein a separate control winding is associated with each said core part.

5. A magnetic transducer according to claim 4 wherein said two confronting magnetic core parts (14,15) form a gap (20) therebetween, and said control windings (38,39) provide said control flux for selectively saturating respective face portions (44) of said cores adjacent to said gap, wherein said saturated face portion of each said core part defines an adjacent nonsaturated highly permeable face portion (46,47), and wherein said highly permeable face portions overlap across the gap to define a highly permeable transducing zone.

6. A magnetic transducer according to claim 5 wherein said transducing gap (20) has a width extending in the direction of a width of said transducer, and said control windings (38,39) are disposed to provide control flux in a path parallel to said transducer width.

7. A magnetic transducer according to claim 6 further including current supply means (54) coupled to said control windings to apply control currents thereto and periodically vary the magnitudes of said control currents to obtain periodical scanning of said transducing zone in the direction of said transducing gap width.

8. A magnetic transducer according to claim 1 or 2 wherein said magnetic core is provided in the form of two oppositely oriented wedge sections (14,15) having cross-sectional areas gradually increasing in opposite directions on either side of a transducing gap (20) and along a width thereof.

9. A magnetic transducer according to claim 1 or 2 wherein said magnetic core comprises two confronting magnetic core parts, each having a front core (14,15) and a back core (16,17) associated therewith and arranged in close proximity thereto, said front cores defining a transducing gap (20) therebetween, the information signal winding being magnetically coupled to said front cores, and the control means comprises a separate control winding (38,39) coupled to each back core for providing a control flux coupled to selectively saturate a face portion of said associated front core adjacent said transducing gap.

10. A magnetic transducer according to claim 9 wherein each said front core (14,15) provides a control flux path extending substantially along a width of said transducer and wherein said control flux paths of each said front core have gradually increasing reluctances in opposite directions along said transducer width.

11. A magnetic transducer according to claim 9 wherein said information signal winding and said control windings are arranged to have their respective turns extending in planes that are generally transverse to each other.

12. A magnetic transducer according to claim 10 wherein said back cores (16,17) have larger cross-sectional areas in a direction perpendicular to said control flux path than corresponding cross-sectional areas of said front cores to prevent saturation of said back cores by said control flux.

13. A magnetic transducer according to claim 9 wherein at least one of said front cores has an information signal winding window provided therein extending substantially in parallel with said transducing gap width.

14. A magnetic transducer according to claim 9 wherein said control windings are wound around said back cores, respectively.

15. A magnetic transducer, comprising: two corresponding magnetic core parts (14,15) with poles defining a transducing gap (20) therebetween at a face defined by said core parts, said core parts having monotonically changing magnetic reluctances in opposite directions on either side of said transducing gap and along a width thereof; a control winding (38,39) associated with each said core part, respectively, for providing a control flux that selectively saturates a portion of each said core part to restrict the flow of information signal flux in said core parts; and an information signal winding (21) associated with said magnetic core parts for coupling information signal flux with respect to said magnetic core parts and said transducing gap; characterised in that the said portions (44) are disposed at said face adjacent said gap and said information signal flux and said control flux extend within said core parts in paths that are generally transverse to each other.

16. A magnetic transducer according to claim 15 wherein said corresponding magnetic core parts (14,15) are provided in the form of oppositely oriented wedge sections having cross-sectional areas that gradually increase in said opposite directions.

17. A magnetic transducer according to claim 15 or 16 wherein said information signal flux path and said control flux path are substantially perpendicular to one another in the vicinity of said transducing gap.

18. A magnetic transducer according to any of claims 15 to 17 wherein each said saturated face portion defines an adjacent nonsaturated highly permeable face portion, said highly permeable face portions overlapping across the transducing gap to define a transducing zone.

19. A magnetic transducer comprising: a magnetic core (14, 15) including a nonmagnetic gap (20) at a face defined by said core and extending in a width direction for effecting coupling of information signal flux relative to a record medium located adjacent said face; and an information signal winding magnetically coupled to said core for transferring information that is defined in said core as information signal flux which flows along a path at the face of said core, which path lies in a plane transverse to said width direction of said gap; and means (38,39) for providing control flux which flows in said core that determines the location at which information signal flux is coupled relative to the record medium, characterised in that said control flux providing means is disposed to cause said control flux to flow along a path at the face of the core and in a plane which is generally transverse to the plane containing the path of information signal flux such that the path of information signal flux is transverse to the path of control flux.

20. A magnetic transducer according to claim 19 wherein said control flux providing means is disposed to provide control flux at the face of the core which is substantially perpendicular to the plane containing said path of said information signal flux.

**Patentansprüche**

1. Magnetwandler umfassend: einen Magnetkern, der sich gegenüberstehende Kernteile (14, 15) besitzt, welche einen Flächenteil definieren, an dem zur magnetischen Kopplung von Inforamtionssignalfluß in Bezug auf ein im Bereich des Flächenteils angeordnetes Aufzeichnungsmedium eine Wandlerzone ausgebildet ist; eine magnetisch mit dem Kern gekoppelte Informationssignalwicklung (21) zur Kopplung von Informationssignalfluß (40) in Bezug auf den Kern; und Steuermittel (38, 39) zur Abgabe von im Kern verlaufendem Steuerfluß (41, 42) zwecks Definition von gesättigten und ungesättigten Bereichen (44, 45; 45, 47) im Kern für eine selektive Erzeugung einer magnetischen Kopplung von Informationsfluß in Bezug auf das Aufzeichnungsmedium, **dadurch gekennzeichnet**, daß die Steuermittel den die benachbarten gesättigten und ungesättigten Bereiche im Flächenteil definierenden Steuerfluß zur Definition der Wandlerzone abgeben und einen Verlauf des Steuerflusses vorzugsweise im Flächenteil in einer Richtung generell quer zum Weg des Informationssignalflusses im Flächenteil bewirken.

2. Magnetwandler nach Anspruch 1, in dem die Steuermittel und die Kernteile so geformt sind, daß ein Verlauf des Steuerflusses im Flächenteil in einer Richtung im wesentlichen senkrecht zum Weg des Informationssignalflusses bewirkt wird.

3. Magnetwandler nach Anspruch 1 oder 2, in dem die Steuermittel eine Steuerwicklung (38) mit Windungen umfassen, welche in einer Ebene verlaufen, die generell quer zu der Ebene liegt, in der die oder jede Windung der Informationssignalwicklung verläuft.

4. Magnetwandler nach Anspruch 3, in dem jedem Kernteil eine gesonderte Steuerwicklung zugeordnet ist.

5. Magnetwandler nach Anspruch 4, in dem die zwei sich gegenüberliegenden Magnetkernteile (14, 15) zwischen sich einen Spalt (20) bilden und die Steuerwicklungen (38, 39) einen Steuerfluß zur selektiven Sättigung jeweiliger Flächenteile (44) der Kerne benachbart zum Spalt abgeben, wobei der gesättigte Flächenteil jedes Kernteils einen benachbarten ungesättigten hochpermeablen Flächenteil (46, 47) definiert und die hochpermeablen Flächenteile sich zur Definition einer hochpermeablen Wandlerzone über dem Spalt überlappen.

6. Magnetwandler nach Anspruch 5, in dem der Wandlerspalt (20) eine Breite in Richtung einer Breite des Wandlers besitzt und die Steuerwicklungen (38, 39) zur Abgabe von Steuerfluß in einem zur Wandlerbreite parallelen Weg angeordnet sind.

7. Magnetwandler nach Anspruch 6 weiterhin enthaltend an die Steuerwicklungen angekoppelte Stromzufuhrmittel (54) zur Einspeisung von Steuerströmen in die Wicklungen und periodischen Änderung der Größen der Steuerströme zwecks Realisierung einer periodischen Abtastung der Wandlerzone in Richtung der Wandlerspaltbreite.

8. Magnetwandler nach Anspruch 1 oder 2, in dem der Magnetkern in Form von zwei gegensinnig orientierten Keilabschnitten (14, 15) mit sich in entgegengesetzten Richtungen auf den Seiten eines Wandlerspaltes (20) und längs dessen Breite graduell vergrößernden Querschnittsflächen vorgesehen ist.

9. Magnetwandler nach Anspruch 1 oder 2, in dem der Magnetkern zwei sich gegenüberstehende Magnetkernteile umfaßt, die jeweils einen Vorderkern (14, 15) und einen diesem zugeordneten Hinterkern (16, 17) besitzen und eng benachbart zueinander angeordnet sind, wobei die Vorderkerne zwischen sich einen Wandlerspalt (20) definieren, die Informationssignalwicklung magnetisch mit den Vorderkernen gekoppelt ist und die Steuermittel jeweils eine mit jeweils einem Hinterkern gekoppelte gesonderte Steuerwicklung (38 39) zur Abgabe eines Steuerflusses umfassen, der zur selektiven Sättigung eines Flächenteils des zugeordneten Vorderkerns benachbart zum Wandlerspalt gekoppelt ist.

10. Magnetwandler nach Anspruch 9, in dem die Vorderkerne (14, 15) jeweils einen Steuerflußweg schaffen, der im wesentlichen längs einer Breite des Wandlers verläuft, und in den die Steuerflußwege der Vorderkerne graduell zunehmende magnetische Widerstände in entgegengesetzten Richtungen längs der Wandlerspaltbreite besitzen.

11. Magnetwandler nach Anspruch 9, in dem die Informationssignalwicklung und die Steuerwicklungen so angeordnet sind, daß ihre jeweiligen Windungen in generell quer zueinander angeordneten Ebenen verlaufen.

12. Magnetwandler nach Anspruch 10, in dem die Hinterkerne (16, 17) in einer Richtung senkrecht zum Steuerflußweg größere Querschnittsflächen besitzen als die entsprechenden Querschnittsflächen der Vorderkerne, um eine Sättigung der Hinterkerne durch den Steuerfluß zu verhindern.

13. Magnetwandler nach Anspruch 9, in dem in wenigstens einem der Vorderkerne ein Informationssignalwicklungs-Fenster vorgesehen ist, das im wesentlichen parallel zur Wandlerspaltbreite verläuft.

14. Magnetwandler nach Anspruch 9, in dem die Steuerwicklungen auf die Hinterkerne gewickelt sind.

15. Magnetwandler umfassend: zwei sich entsprechende Magnetkernteile (14, 15) mit einem Wandlerspalt (20) zwischen sich an einer durch die Kernteile definierten Fläche, wobei die Kernteile sich in entgegengesetzten Richtungen auf beiden Seiten des Wandlerspaltes und längs dessen Breite monoton ändernde magnetische Widerstände besitzen; jeweils eine jedem Kernteil zugeordnete Steuerwicklung (38, 39) zur Abgabe eines Steuerflusses, der zwecks Begrenzung des Informationssignalfluß-Verlaufs in den Kernteilen einen Teil jedes Kernteils selektiv sättigt; und eine den Magnetkernteilen zugeordnete Informationssignalwicklung (21) zur Kopplung von Informationssignalfluß in Bezug auf die Magnetkernteile und den Wandlerspalt, **dadurch gekennzeichnet**, daß die Teile (44) an der Fläche benachbart zum Spalt angeordnet sind und der Informationssignalfluß sowie der Steuerfluß in den Kernteilen in generell quer zueinander ausgerichteten Wegen verlaufen.

16. Magnetwandler nach Anspruch 15, in dem die sich entsprechenden Magnetkernteile (14, 15) in Form von gegensinnig orientierten Keilabschnitten mit in den entgegengesetzten Richtungen sich graduell vergrößernden Querschnittsflächen vorgesehen sind.

17. Magnetwandler nach Anspruch 15 oder 16, in dem der Informationssignalflußweg und der Steuerflußweg im Bereich des Wandlerspaltes im wesentlichen senkrecht aufeinander stehen.

18. Magnetwandler nach den Ansprüchen 15 bis 17, in dem die gesättigten Flächenteile jeweils einen benachbarten ungesättigten hochpermeablen Flächenteil definieren, wobei sich die hochpermeablen Flächenteile zur Definition einer Wandlerzone über dem Wandlerspalt überlappen.

19. Magnetwandler umfassend: einen Magnetkern (14, 15), der zur Realisierung einer Kopplung von Informationssignalfluß in Bezug auf ein im Bereich einer durch den Kern definierten Fläche angeordnetes Aufzeichnungsmedium einen unmagnetischen Spalt (20) an der Fläche und in einer Breitenrichtung verlaufend enthält; eine mit dem Kern magnetisch gekoppelte Informatinssignalwicklung zur Übertragung von Information, die im Kern als Informationssignalfluß definiert ist, der längs eines Weges an der Fläche des Kerns verläuft, welcher in einer Ebene quer zur Breitenrichtung des Spaltes liegt; und Mittel (38, 39) zur Abgabe eines im Kern verlaufenden Steuerflusses, der die Stelle, an der Informationssignalfluß im Bezug auf das Aufzeichnungsmedium gekoppelt wird, festlegt, **dadurch gekennzeichnet**, daß die den Steuerfluß abgebenden Mittel so angeordnet sind, daß ein Verlauf des Steuerflusses längs eines Weges an der Fläche und in einer generell quer zu der den Weg des Informationssignalflusses enthaltenden Ebene liegenden Fläche bewirkt wird, so daß der Weg des Informationssignalflusses quer zum Weg des Steuerflusses verläuft.

20. Magnetwandler nach Anspruch 19, in dem die den Steuerfluß abgebenden Mittel so angeordnet sind, daß der Steuerfluß an der Fläche des Kerns abgegeben wird, welche im wesentlichen senkrecht auf der den Weg des Informationssignalflusses enthaltenden Fläche steht.

**Revendications**

1. Transducteur magnétique comprenant : un noyau magnétique ayant des éléments de noyau face à face (14, 15) définissant une partie face au droit de laquelle une zone de transduction est formée pour coupler magnétiquement le flux de signal d'information à un support d'enregistrement placé adjacent à la partie face ; et un enroulement de signal d'information (21) couplé magnétiquement audit noyau pour coupler le flux de signal d'information (40) audit noyau ; et un moyen de commande (38, 39) pour fournir un flux de commande (41, 42) qui s'écoule dans ledit noyau pour définir des régions saturées et non saturées (44, 45 ; 45, 47) adjacentes dans ledit noyau pour effectuer de manière sélective le couplage magnétique du flux d'information au support d'enregistrement ; caractérisé en ce que le moyen de commande fournit le flux de commande qui définit les régions saturées et non saturées adjacentes dans ladite partie face pour y définir ladite zone de transduction et faire en sorte que ledit flux de commande s'écoule de façon préférentielle dans ladite partie face dans une direction globalement transversale au trajet du flux de signal d'information dans ladite partie face.

2. Transducteur magnétique selon la revendication 1, dans lequel ledit moyen de commande et les éléments de noyau sont conformés pour faire en sorte que ledit flux de commande s'écoule dans ladite partie face dans une direction qui est sensiblement perpendiculaire audit trajet dudit flux de signal d'information.

3. Transducteur magnétique selon la revendication 1 ou 2, dans lequel ledit moyen de commande comprend un enroulement de commande (38) ayant des boucles qui s'étendent dans un plan qui est globalement transversal au plan dans lequel s'étend la, ou chaque, boucle dudit enroulement de signal d'information.

4. Transducteur magnétique selon la revendication 3, dans lequel un enroulement de commande distinct est associé avec chacun desdits éléments de noyau.

5. Transducteur magnétique selon la revendication 4, dans lequel lesdits deux éléments de noyau magnétique face à face (14, 15) forment entre eux un entrefer (20), et lesdits enroulements de commande (38, 39) fournissent ledit flux de commande pour saturer de manière sélective les parties faces (44) respectives desdits noyaux adjacentes audit entrefer, dans lequel ladite partie face saturée de chacun desdits éléments de noyau définit une partie face hautement perméable non saturée (46, 47) adjacente, et dans lequel lesdites parties faces hautement perméables se chevauchent à travers l'entrefer pour définir une zone de transduction hautement perméable.

6. Transducteur magnétique selon la revendication 5, dans lequel ledit entrefer de transduction (20) a une largeur s'étendant dans la direction de la largeur dudit transducteur, et dans lequel lesdits enroulements de commande (38, 39) sont disposés pour fournir le flux de commande dans un trajet parallèle à ladite largeur de transducteur.

7. Transducteur magnétique selon la revendication 6, comprenant en outre un moyen de délivrance de courant (54) relié auxdits enroulements de commande pour leur délivrer des courants de commande et pour modifier de façon périodique les valeurs desdits courants de commande pour obtenir le balayage périodique de ladite zone de transduction dans la direction de ladite largeur d'entrefer de transduction.

8. Transducteur magnétique selon la revendication 1 ou 2, dans lequel ledit noyau magnétique est prévu sous la forme de deux sections en biseau (14, 15) orientées en sens contraires ayant des superficies de section transversale augmentant graduellement en sens contraires de chaque côté d'un entrefer de transduction (20) et le long de sa largeur.

9. Transducteur magnétique selon la revendication 1 ou 2, dans lequel ledit noyau magnétique comprend deux éléments de noyau magnétique face à face, ayant chacun un noyau avant (14, 15) et un noyau arrière (16, 17) associé avec celui-ci et disposé a proximité rapprochée de celui-ci, lesdits noyaux avant définissant entre eux un entrefer de transduction (20), l'enroulement de signal d'information étant couplé de façon magnétique auxdits noyaux avant, et dans lequel le moyen de commande comprend un enroulement de commande distinct (38, 39) couplé à chaque noyau arrière pour fournir un flux de commande couplé pour saturer de manière sélective une partie face dudit noyau avant associé adjacent audit entrefer de transduction.

10. Transducteur magnétique selon la revendication 9, dans lequel chacun desdits noyaux avant (14, 15) fourni un trajet de flux de commande s'étendant sensiblement le long de la largeur dudit transducteur, et dans lequel lesdits trajets de flux de commande de chacun desdits noyaux avant ont des réluctances croissant graduellement en sens contraires le long de ladite largeur de transducteur.

11. Transducteur magnétique selon la revendication 9, dans lequel ledit enroulement de signal d'information et lesdits enroulements de commande sont disposés de façon à ce que leurs boucles respectives s'étendent dans des plans qui sont globalement transversaux l'un à l'autre.

12. Transducteur magnétique selon la revendication 10, dans lequel lesdits noyaux arrière (16, 17) ont des superficies de section transversale plus grandes dans une direction perpendiculaire audit trajet de flux de commande que les superficies de section transversale correspondantes desdits noyaux avant, pour empêcher la saturation desdits noyaux arrière par ledit flux de commande.

13. Transducteur magnétique selon la revendication 9, dans lequel au moins l'un desdits noyaux avant possède une fenêtre d'enroulement de signal d'information qui y est disposée en s'étendant sensiblement parallèlement à ladite largeur d'entrefer de transduction.

14. Transducteur magnétique selon la revendication 9, dans lequel lesdits enroulements de commande sont bobinés, respectivement, autour desdits noyaux arrière.

15. Transducteur magnétique comprenant : deux éléments de noyau magnétique correspondants (14, 15), avec des pôles définissant entre eux un entrefer de transduction (20) au droit d'une face définie par lesdits éléments de noyau, lesdits éléments de noyau ayant des réluctances magnétiques variant de façon monotone en sens contraires de chaque côté dudit entrefer de transduction et suivant la largeur de celui-ci ; un enroulement de commande (38, 39) associé, respectivement, avec chacun desdits éléments de noyau, pour fournir un flux de commande qui sature de façon sélective une partie de chacun desdits éléments de noyau pour limiter l'écoulement du flux de signal d'information dans lesdits éléments de noyau ; et un enroulement de signal d'information (21) associé avec lesdits éléments de noyau magnétique pour coupler le flux de signal d'information auxdits éléments de noyau magnétique et audit entrefer de transduction ; caractérisé en ce que lesdites parties (44) sont disposées au droit de ladite face adjacente audit entrefer et en ce que ledit flux de signal d'information et ledit flux de commande s'étendent à l'intérieur desdits éléments de noyau en des trajets qui sont globalement transversaux l'un à l'autre.

16. Transducteur magnétique selon la revendication 15, dans lequel lesdits éléments de noyau magnétique (14, 15) correspondants sont prévus sous la forme de sections en biseau orientées en sens contraires ayant des superficies de section transversale qui augmentent graduellement dans lesdits sens contraires.

**17.** Transducteur magnétique selon la revendication 15 ou 16, dans lequel ledit trajet de flux de signal d'information et ledit trajet de flux de commande sont sensiblement perpendiculaires l'un à l'autre au voisinage dudit entrefer de transduction.

**18.** Transducteur magnétique selon l'une quelconque des revendications 15 à 17, dans lequel chacune desdites parties faces saturées définit une partie face hautement perméable non saturée adjacente, lesdites parties faces hautement perméables se chevauchant en travers de l'entrefer de transduction pour définir une zone de transduction.

**19.** Transducteur magnétique comprenant : un noyau magnétique (14, 15) incluant un entrefer non magnétique (20) au droit d'une face définie par ledit noyau et s'étendant dans la direction de la largeur pour effectuer le couplage du flux de signal d'information à un support d'enregistrement situé adjacent à ladite face ; et un enroulement de signal d'information couplé magnétiquement audit noyau pour transférer l'information qui est définie dans ledit noyau comme un flux de signal d'information qui s'écoule suivant un trajet au droit de la face dudit noyau, lequel trajet se trouve dans un plan transversal à ladite direction de la largeur dudit entrefer ; et un moyen (38, 39) pour fournir un flux de commande qui s'écoule dans ledit noyau pour définir une zone de transduction qui détermine l'emplacement auquel le flux de signal d'information est couplé à un support d'enregistrement ; caractérisé en ce que ledit moyen fournissant le flux de commande est disposé de manière à faire en sorte que ledit flux de commande s'écoule suivant un trajet au droit de la face du noyau et dans un plan qui est globalement transversal au plan contenant le trajet du flux de signal d'information de telle manière que le trajet du flux de signal d'information soit transversal au trajet du flux de commande.

**20.** Transducteur magnétique selon la revendication 19, dans lequel ledit moyen de délivrance de flux de commande est disposé pour délivrer le flux de commande au droit de la face du noyau qui est sensiblement perpendiculaire au plan contenant ledit trajet dudit flux de signal d'information.

FIG_1A

FIG_1B

FIG_1C

FIG_1D

FIG_2

FIG_3

PERMEABILITY (m) ——

53
B1
B2
0 —

FLUX DENSITY (B) ——

# FIG_4

46
48
10
44
W
14
20
45
56
47
49
15

# FIG_5

W3

PERMEABILITY (M)

53
53a
56

# FIG_6

(B) ——— FLUX DENSITY ——→ (B)

18

FIG_7

FIG_8

FIG_9